# EUROPEAN PATENT APPLICATION

(11) **EP 2 884 693 A2**
(43) Date of publication of application: **17.06.2015**
(21) Application number: 14164553.1
(22) Date of filing: 14.04.2014
(51) Int. Cl.: H04L 12/18, H04L 29/06, H04L 12/413

(54) **Broadcast receiving device and broadcast receiving method**

(30) Priority: 16.12.2013 JP 2013259261
(71) Applicant: Kabushiki Kaisha Toshiba, Tokyo 105-8001 (JP)
(72) Inventor: Hashimoto, Masanori, Tokyo, 105-8001 (JP)
(74) Representative: Henkel, Breuer & Partner

(57) **Abstract**

According to one embodiment, an electronic device comprises a transmitting and receiving portion connected to a local area network (LAN), and a LAN information processor (231) configured to acquire information transmitted by another electronic device over the LAN. The LAN information processor (231) comprises an external program determination portion (2314) configured to analyze the information, and to determine and specify a program received by the other electronic device. The LAN information processor (231) comprises a common program determination portion (2321) configured to determine whether or not a program currently being viewed is identical to the program received by the other electronic device. The LAN information processor (231) comprises a message output portion (2325) configured to output a predetermined display message if the common program determination portion (2321) determines that the program currently being viewed is identical to the program received by the other electronic device.

## Description

Embodiments described herein relate generally to a broadcast receiving device and a broadcast receiving method.

Recently, television receiving devices (hereinafter referred to as TV devices) are sometimes connected to the Internet. The television receiving devices connected to the Internet can access a service server and receive information of a program viewed by other viewers. That is, information can be exchanged between the TV devices connected to the Internet through the service server.

Moreover, recently, a local area network (domestic LAN) is provided also at home. A plurality of TV devices, a plurality of recording and replaying devices, a set-top box, a local server, etc., may be connected to the domestic LAN.

A general architecture that implements the various features of the embodiments will now be described with reference to the drawings. The drawings and the associated descriptions are provided to illustrate the embodiments and not to limit the scope of the invention.
FIG. 1 illustrates a representative arrangement example of devices on a local area network according to an embodiment.
FIG. 2 illustrates a representative configuration example of a TV device according to the embodiment.
FIG. 3 illustrates an appearance of a remote controller.
FIG. 4 is a flowchart illustrating a representative example of setting a searching operation of another TV device in the TV device according to the embodiment.
FIG. 5 is a flowchart illustrating a representative example of setting an output message (a nickname or an installation location) in the TV device according to the embodiment.
FIG. 6 is a flowchart illustrating a representative example in which various settings can be further applied to a plurality of TV devices according to the embodiment, which are connected to a LAN.
FIG. 7 is a flowchart illustrating a representative operation example of the TV device according to the embodiment.
FIG. 8 illustrates a representative example of a function block formed in a LAN information processor in the TV device according to the embodiment.
FIG. 9 illustrates another arrangement example of the devices on the local area network according to the embodiment.
FIG. 10 illustrates another arrangement example of the devices on the local area network according to the embodiment.
FIG. 11 illustrates another embodiment in which information is transmitted from a device on a local area network.

Various embodiments will be described hereinafter with reference to the accompanying drawings.

In general, according to one embodiment, an electronic device comprises a transmitting and receiving portion connected to a local area network (LAN), and a LAN information processor configured to acquire information transmitted by another electronic device over the LAN.

The LAN information processor comprises an external program determination portion configured to analyze the information, and to determine and specify a program received by the other electronic device.

The LAN information processor comprises a common program determination portion configured to determine whether or not a program currently being viewed is identical to the program received by the other electronic device.

The LAN information processor comprises a message output portion configured to output a predetermined display message if the common program determination portion determines that the program currently being viewed is identical to the program received by the other electronic device.

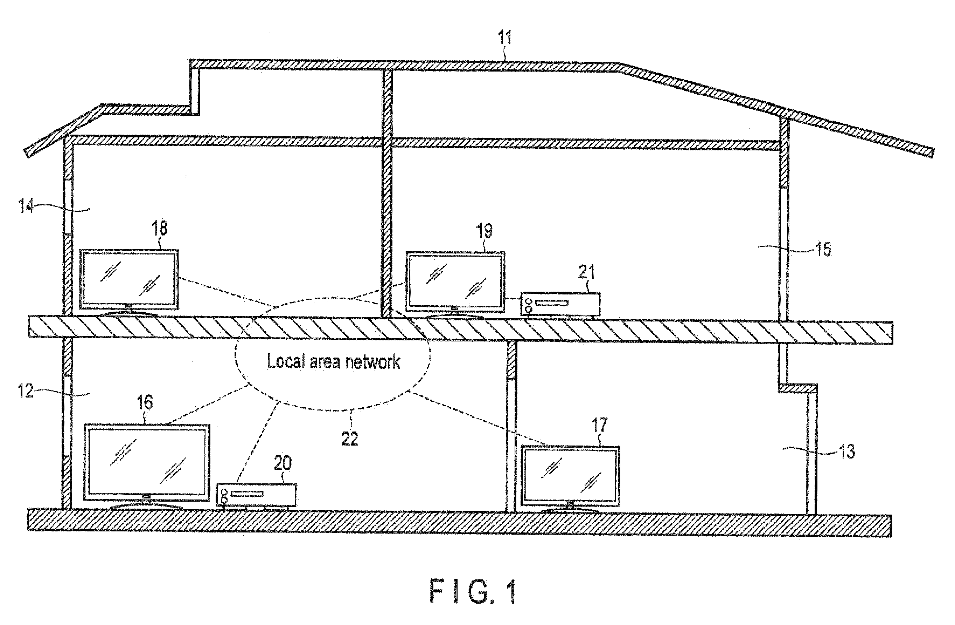

Various embodiments will be described hereinafter with reference to the accompanying drawings. FIG. 1 schematically illustrates an example of a detached house 11 in which a local area network system according to this embodiment is constructed. The house 11 is a two-story house. The house 11 comprises, for example, two rooms 12 and 13 on the first floor and two rooms 14 and 15 on the second floor.

TV devices 16 and 17 are placed in the rooms 12 and 13 on the first floor, respectively. TV devices 18 and 19 are also placed in the rooms 14 and 15 on the second floor. Furthermore, recording and replaying devices 20 and 21 such as an optical disk recorder and a hard disk drive (HDD) are placed in one of the two rooms on either the first or second floor, that is, the rooms 12 and 15, respectively.

The TV devices 16 to 19 and the recording and replaying device 20 have a network connection function and are connected to each other over a local area network 22. It should be noted that the recording and replaying device 21 is bidirectionally communicatively connected to the TV device 19.

In this case, the TV devices 16 to 19 and the recording and replaying device 20 directly connected to the local area network 22 can directly perform bidirectional communication with each other over the local area network 22 without using a server, etc., for communication control or management.

Each of the TV devices 16 to 19 has a function (a viewing information outputting function) of outputting, to the local area network 22, information indicating a program (for example, a program title) which is currently received and tuned by each device and whose video display or audio replay is performed by each device, that is, a program currently being viewed by a user.

Also, each of the TV devices 16 to 19 can receive information output to the local area network 22 by the viewing information outputting function. Then, each of the TV devices 16 to 19 has a function (viewing program display function) of displaying programs being supplied for viewing on the TV devices other than it based on the received information.

Accordingly, a user viewing a program on, for example, the TV device 16 can know programs currently being viewed on the TV devices 17 to 19 in the other rooms 13 to 15 by seeing content displayed on the receiving device 16 by the viewing program display function.

Thus, the user viewing the program on, for example, the TV device 16 can invite a user viewing the same program in the room 13, 14 or 15 to the room 12, and view the program with him. Also, the user viewing the program on, for example, the TV device 16 can move to the room 13, 14 or 15 in which a user viewing the same program is present. Accordingly, sufficiently practical bidirectional communication can be performed using the local area network 22, and convenience for a user can be further improved.

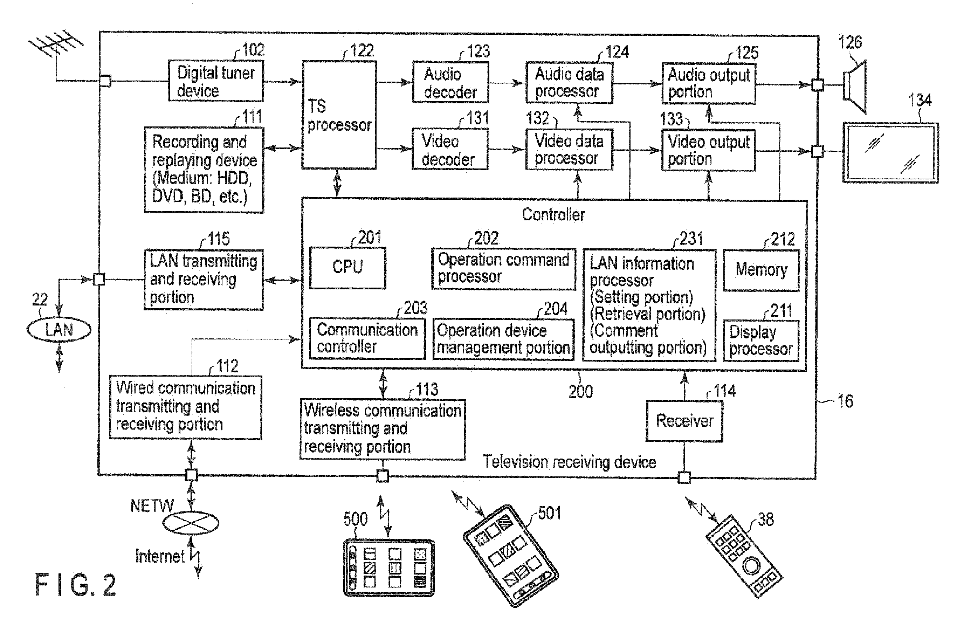

FIG. 2 schematically illustrates an example of a signal processing system of the TV device 16. Since the signal processing systems of the TV devices 17 to 19 are similar to that of the TV device 16, their explanations will be omitted.

The TV device 16 comprises, for example, a digital tuner device 102 including a plurality of tuners configured to receive, for example, scrambled digital terrestrial broadcasting signals. The tuner device 102 may further comprise, for example, a tuner for receiving broadcasting satellite (BS)/communication satellite (CS) digital broadcasting (not shown).

A signal of a broadcast program received in the tuner device 102 is input to a TS processor 122, and transport streams (TSs) of a plurality of channels (CH) are re-multiplexed into a TS. The multiplexed TS includes a packet stream of a broadcast program of each channel. Identification information for distinguishing a channel and a packet is added to a packet of each channel. The multiplexed TS is input to a recording and replaying device 111. Also, of the TSs input to the TS processor 122, a packet including control information is input to a controller 200 and processed.

The recording and replaying device 111 comprises, for example, a hard disk drive and/or an optical disk recording and replaying device. A Digital Versatile Disk (DVD) and/or a Blu-ray Disk (registered trademark) (BD), etc., are adopted as the optical disk.

The packet transmitted from the TS processor 122 to the controller 200 includes, for example, information concerning an entitlement control message (ECM) which is encoded information of a broadcast program, an event information table (EIT) which is a table on which event information such as a program name, a performer and a beginning time is described, etc., and electric program guide (EPG) information.

Video data included in the packet is encoded by, for example, a Moving Picture Expert Group (MPEG) method, an Advanced Video Coding (AVC) method, etc. Also, audio data in an audio packet is encoded by, for example, a Pulse Code Modulation (PCM) method, a Dolby method, the MPEG method, etc. An AV decoder separates the video packet and the audio packet of the program, and decodes data in each packet by each method.

Thus, of the packets separated in the TS processor 122, packets including the audio data are input to an audio decoder 123, and decoded depending on an encoding method. Synchronization processing, volume adjustment, etc., are performed in an audio data processor 124 on the audio data decoded by the audio decoder 123, and the audio data is supplied to an audio output portion 125. The audio output portion 125 performs stereo separation processing, etc., in accordance with a speaker system, and supplies output to a speaker 126.

Of the packets separated in the TS processor 122, packets including the video data are input to a video decoder 131, and decoded depending on an encoding method. Synchronization processing, brightness adjustment, color adjustment, etc., are performed in a video data processor 132 on the video data decoded by the video decoder 131. The output of the video data processor 132 is supplied to a video output portion 133. The video output portion 133 can multiplex data, a figure, a program guide, etc., from the controller 200 into a main video signal. Also, the video output portion 133 sets a scale, a resolution, the number of lines, an aspect ratio, etc., according to a display 134 for an output video signal, and outputs them to the display 134.

It should be noted that audio and video packets of a pay program are sometimes encoded. In this case, although a processing system for decoding by use of key information is present, its explanation will be omitted.

The controller 200 comprises a central processing unit (CPU) 201, an operation command processor 202, a communication controller 203, an operation device management portion 204, a display processor 211 and a memory 212. Furthermore, it comprises an electric program guide (EPG) data processor, a recording controller, etc., which are not shown.

The CPU 201 controls a total operation sequence of the controller 200. The operation command processor 202 can analyze an operation command input from the outside, and reflect an operation according to the command in the TV device 16.

The operation device management portion 204 can grasp and manage device distinguishing data of portable devices 500 and 501, a remote controller 38, etc., configured to supply an operation signal to the controller 200.

The display processor 211 can generally control a video signal displayed on the display 134 through the video output portion 133. Also, the display processor 211 can perform adjustment processing of a resolution of an image signal, a display size, a display area, etc. Also, the display processor 211 can supply a program guide video signal created using EPG data, or a menu video signal created in the controller 200 in accordance with the operation signal to the video output portion 133. The memory 212 can store various types of data, various applications, etc., stored in the controller 200.

The communication controller 203 can communicate with the outside and capture an operation command, data, content, etc. The captured content and data can be stored in, for example, the recording and replaying device 111 or the memory 212.

The communication controller 203 can transmit data, content, etc., from the TV device 16 to the outside. The communication controller 203 is connected to a wired communication transmitting and receiving portion 112, a wireless communication transmitting and receiving portion 113, a receiver 114 and a LAN transmitting and receiving portion 115. Also, the communication controller 203 can receive content data, control data, etc., from the outside through the wired communication transmitting and receiving portion 112, the wireless communication transmitting and receiving portion 113, the receiver 114 and the LAN transmitting and receiving portion 115.

The wireless communication transmitting and receiving portion 113 can transmit and receive data between a plurality of the portable devices 500 and 501, and is used for a short-range communication. The portable devices 500 and 501 can also remotely control a TV device 100. The portable devices 500 and 501 can access a server through a base station not shown, the Internet, etc. The portable devices 500 and 501 can download content, various applications, game software, etc., from the server, and transfer them to the controller 200 through the wireless communication transmitting and receiving portion 113. Also, the portable devices 500 and 501 can transfer information for acquiring content (for example, an address of a web server, an e-mail address and a network address) to the controller 200 through the wireless communication transmitting and receiving portion 113.

When the content, applications or game software is transferred from the portable device 500 or 501, the communication controller 203 operates. The communication controller 203 stores the received content in the memory 212. The content may be stored in the recording and replaying device 111 in accordance with an operation command or automatically. The recording and replaying device 111 can record the received content in, for example, a hard disk. In the hard disk, the content is managed as a content file.

Also, the communication controller 203 can also receive an operation signal from the remote controller 38 through the receiver 114.

The wired communication transmitting and receiving portion 112 can transmit and receive data between remote servers over the Internet.

A menu video signal, a program guide video signal, etc., for display are stored and/or managed in the display processor 211. When a menu or a program guide is displayed, menu screen data or the program guide video signal are read from a data storing portion (a memory or a hard disk) based on control by a display controller, and supplied to the display processor 211. This allows a menu image or a program guide image to be displayed on the display 134.

The menu video signal or program guide video signal, etc., for display can also be transmitted to the portable device 500 or 501. If the portable device 500 or 501 requests the menu video signal or program guide video signal, etc., the display processor 211 can transmit the menu video signal or program guide video signal.

The portable device 500 or 501 can display the menu video signal and program guide video signal on a touchscreen. A user can give an operation instruction to a TV device by touching an operation button displayed on the touchscreen (or the screen of a point-type panel).

The LAN transmitting and receiving portion 115 is connected to a domestic LAN.

The controller 200 further comprises a LAN information processor 231. The LAN information processor 231 can directly transmit and receive information to and from another electronic device over the domestic LAN. The function and operation will be described in detail later.

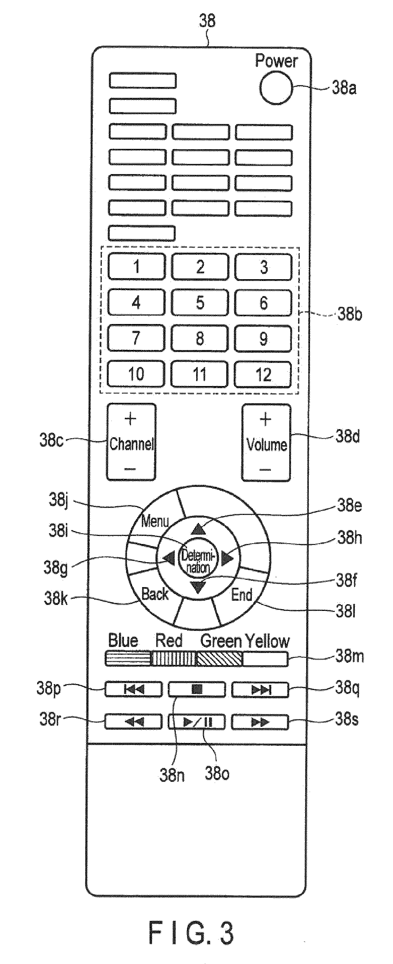

FIG. 3 illustrates an appearance of the remote controller 38. The remote controller 38 mainly comprises a power key 38a, number keys 38b, a channel up/down key 38c, a volume control key 38d, a cursor-up key 38e, a cursor-down key 38f, a cursor-left key 38g, a cursor-right key 38h, a determination key 38i, a menu key 38j, a back key 38k, an end key 381 and four color keys 38m (blue, red, green and yellow), etc.

The remote controller 38 also comprises a stop key 38n, a play/pause key 38o, a backward skip key 38p, a forward skip key 38q, a fast-backward key 38r, a fast-forward key 38s, etc. That is, a recording and replaying portion 27 can be played, stopped and paused by the operation of the stop key 38n or the play/pause key 38o of the remote controller 38.

Also, video data, audio data, etc., replayed in the recording and replaying portion 27 can be skipped by a fixed amount backward or forward relative to the replay direction, that is, a backward skip or forward skip can be performed by the operation of the backward skip key 38p or the forward skip key 38q of the remote controller 38.

In addition, the video data, audio data, etc., replayed in the recording and replaying portion 27 can be continuously replayed at high speed backward or forward relative to the replay direction, that is, fast-backward replay or fast-forward replay can be performed by the operation of the fast-backward key 38r, the fast-forward key 38s, etc., of the remote controller 38.

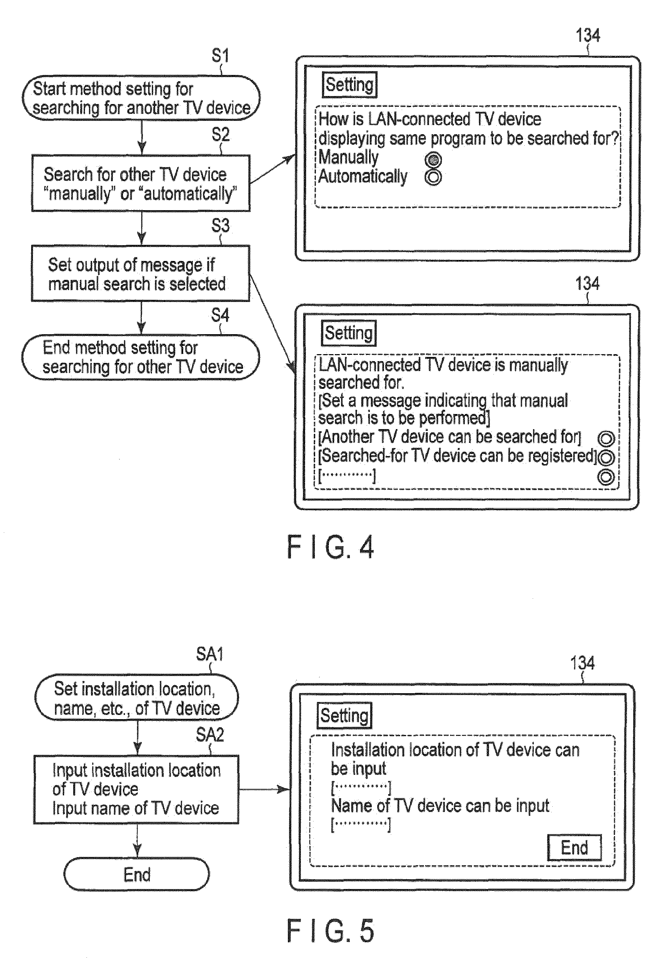

FIG. 4 illustrates operation procedures when the TV device 16 is initially set. The figure especially illustrates procedures for setting either automatic search or manual search at the time of, especially, searching for another TV device connected to a LAN and acquiring information. An item for searching for the other TV device (in-LAN device searching method setting) is prepared in a setting menu.

In the case where the setting menu is displayed on the display 134, when the item (in-LAN device searching method setting) is selected, and the determination button is pushed by, for example, the operation of a remote controller, a selection item indicating whether to start a search for a LAN-connected TV device displaying the same program "manually" or "automatically" is displayed (steps S1 and S2).

If "automatically" is selected, the TV device 16 searches for the other TV device connected to the LAN, for example, every ten minutes, every thirty minutes or every hour by polling. Then, for example, program information currently viewed on the other TV device can be acquired.

If "manually" is selected, the TV device 16 can search for the other TV device connected to the LAN only when specific operation input is performed by a user. However, the user sometimes forgets to perform the specific operation input, or is unaware of the input. Then, messages can be output in the TV device 16, for example, for a fixed period of time or when the device is turned on (step S3). For example, the messages include items "another TV device can be manually searched for," "manually searched-for TV device can be registered," etc. When a setting end button is pushed, the setting for search ends (step S4).

FIG. 5 illustrates procedures for setting a nickname or an installation location of a TV device.

Items "set installation location of TV device," "set name of TV device," etc., are prepared in a setting menu. When the items "set installation location of TV device" and/or "set name of TV device" are selected and the determination button is pushed by the operation of a remote controller, input space of the installation location and/or that of the name are displayed on a display. A user can input the installation location (kitchen, living room, bedroom, den, etc.) to the space using a remote controller or a mobile device. Also, the user can input the name of the TV device (for example, Betty, Jack and Taro) to the space using the remote controller or mobile device.

The installation location or the TV device name can be transmitted to another TV device based on the control of the LAN information processor 231. In this case, the installation location or the TV device name can be transmitted to the other TV device along with program identification information of a program currently being viewed.

A TV device which received the installation location and TV device name along with the program identification information can recognize what program is viewed on a TV device which is the transmission source, where the device is placed, and what its name is.

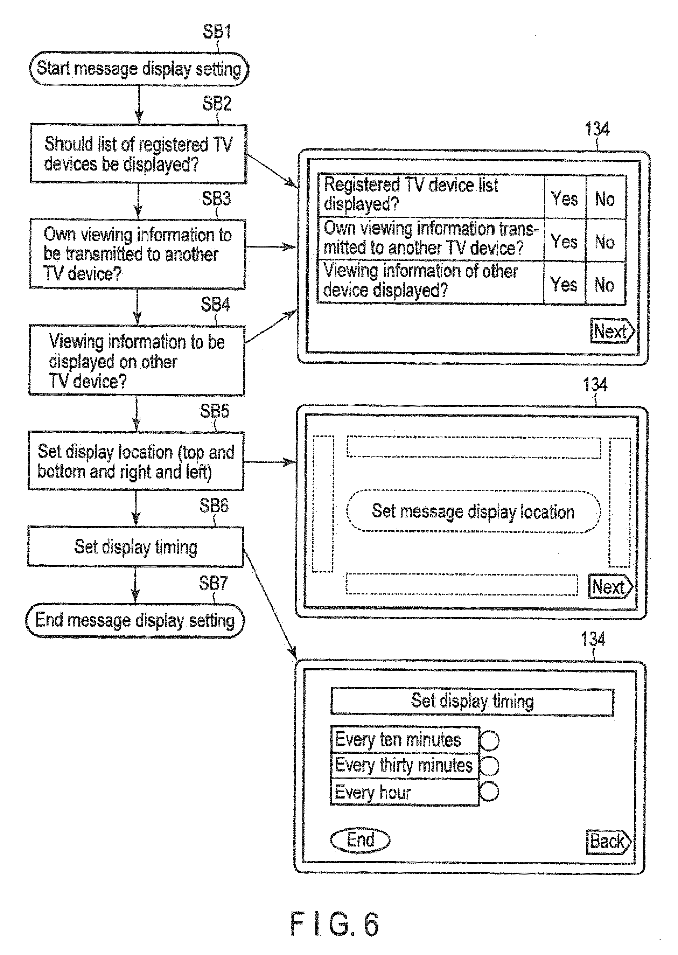

FIG. 6 is a flowchart for explaining that various settings can be further applied to a plurality of TV devices connected to a LAN. The figure is a flowchart for setting what message is displayed on a TV device. An item "message display setting" is prepared in a setting menu associated with the operation of the LAN information processor 231. When the item "message display setting" is selected and the determination button is pushed in the course of, for example, the operation of a remote controller, setting menus as shown below are displayed.
(i) A setting menu for determining whether to display a list of registered TV devices or not is displayed on the display 134 (steps SB1 and SB2). The registered TV devices are TV devices connected to the LAN, recognized by a mutual communication function and registered in a communication device management portion.
(ii) Also, a setting menu for determining whether to transmit own viewing information to another TV device or not is displayed on the display 134 (step SB3). The own viewing information is identification information of a program currently being viewed (program information and/or installation location information, a TV device name, etc.).
(iii) Also, a setting menu for determining whether to display information which is acquired from and viewed on the other TV device or not is displayed on the display 134 (step SB4). The information viewed on the other TV device means information for indicating what program is viewed on the other TV device. For example, a program name and an installation location or a TV device name, etc., are displayed together. The following two items are possible as a display form:
   A first item for displaying a message indicating that a program viewed on a TV device is identical to that viewed on another TV device; and

A second item for displaying a message indicating that a program viewed on a TV device is different from that viewed on another TV device.

The messages of the first and second items may be distinguished by, for example, colors, marks, etc.

Moreover, a display location of the message can be set (step SB5). The message display location is selected from some candidates. In addition, display timing of the message can be set (step SB6).

Regarding the display timing of the message, time intervals such as every ten minutes, every thirty minutes and every hour are selectable.

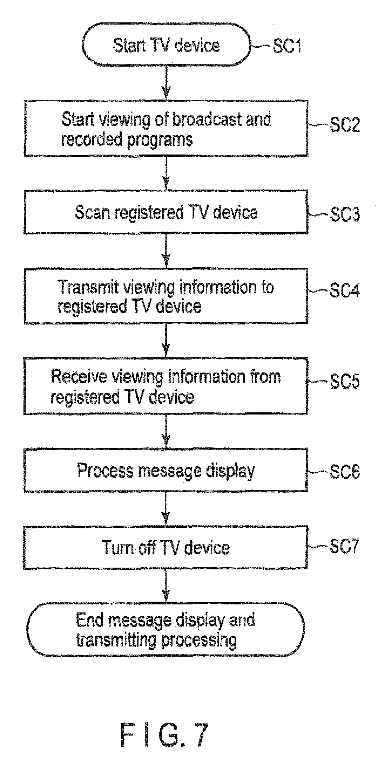

FIG. 7 is a flowchart illustrating another operation example of a TV device. The TV device is turned on, and viewing of a broadcast program or a recorded program is started (steps SC1 and SC2). The TV device carries out scanning or polling of a registered TV device (step SC3). It should be noted that not only the registered TV devices but all TV devices connected to a LAN may be scanned. Further, viewing information is transmitted to the registered TV device (step SC4). The viewing information may include identification information, installation location information, a TV device name, etc., of a program currently being viewed.

Also, the viewing information is received from the registered TV device or the TV device on the LAN (another TV device) (step SC5). Then, an external program determination portion analyzes the viewing information, and determines and specifies a program received by the other TV device. Next, a common program determination portion determines whether or not a program currently being viewed is identical to the program received by the other TV device.

If the common program determination portion determines that a program currently being viewed is identical to that received by another TV device, a message output portion outputs a predetermined display message.

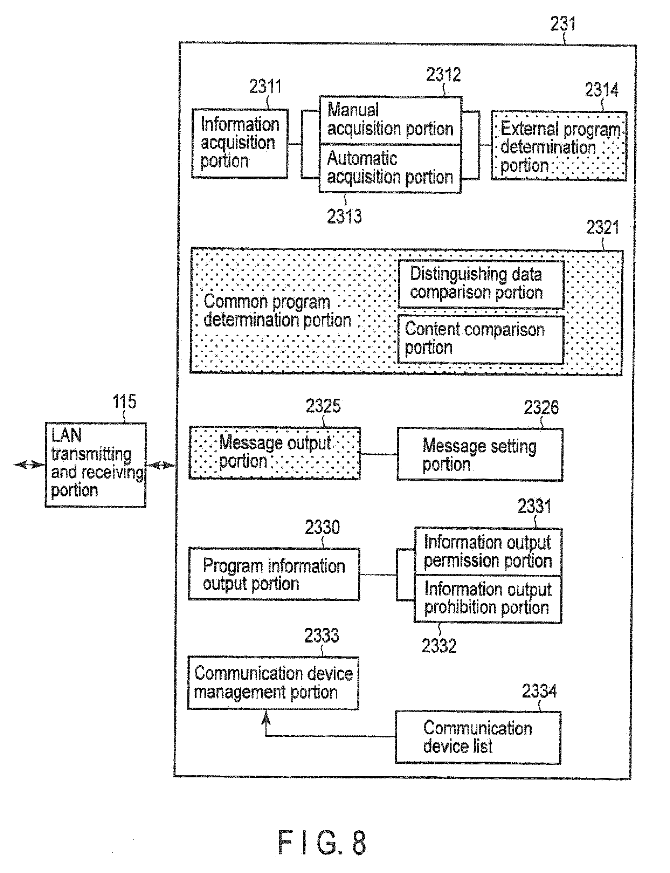

FIG. 8 illustrates an example of a function block formed in the LAN information processor 231 to execute the various operations.

An information acquisition portion 2311, a manual acquisition portion 2312 and an automatic acquisition portion 2313 can utilize setting data of the initial setting described with respect to FIG. 4. Also, the message concerning manual search which is described with respect to FIG. 4 is utilized in a message output portion 2325 and a message setting portion 2326.

That is, message setting data is kept in the message setting portion 2326. The various messages are selectively output from the message output portion 2325 to a display. The various messages can be selected based on the message setting data.

Data of the nickname and the installation location of the TV device set in FIG. 5 is kept in the message setting portion 2326, and can be output from the message output portion 2325 to a display or a communication system.

Data of the list of the registered TV devices described with respect to FIG. 6, that is, a communication device list 2334 is included in the management data of a communication device management portion 2333. Also, a plurality of TV devices connected to a LAN are registered in the management data of the communication device management portion 2333 along with its identification information.

Also, setting data for determining whether to transmit own viewing information to another TV device or not is stored in a program information output portion 2330. An information output permission portion 2331 or an information output prohibition portion 2332 is set to be active based on the setting data. A device of a transmission destination is managed by the communication device management portion 2333.

Also, setting data for determining whether or not to display information which was acquired from the other TV device and are being viewed by the other TV device is stored in the message setting portion 2326. When the program name being viewed on the other TV device, an installation location, a TV device name, etc., are displayed, they are output from a message output portion 235 to the display 134. Also, data for indicating a display location of a message and data for determining display timing of a message are stored in the message setting portion 2326.

As described in FIG. 7, an external program determination portion 2314 analyzes viewing information, and determines and specifies a program received by another TV device, when the viewing information is received from the registered TV device or the TV device on the LAN (another TV device). A common program determination portion 2321 determines whether or not the program currently being viewed is identical to that received by another TV device.

The common program determination portion 2321 can adopt a plurality of methods for determining commonality of two programs. For example, one of the methods can be a method for comparing program information of a first program and that of another program and determining whether they are matched or not. A typical example of the program information is a program name. Since a name of performer is also included in the program information, the performer names of both of the programs may be compared with each other for determination.

Moreover, part of musical or video content of the first program can be compared with that of a second program to determine whether both of the programs are the same program or not.

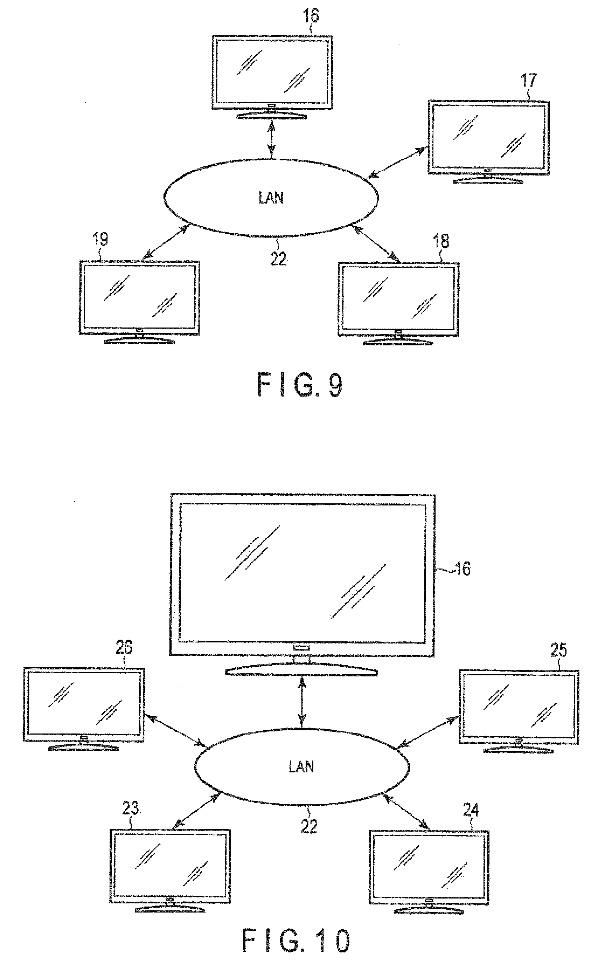

FIG. 9 illustrates a state where the TV devices 16 to 19 are connected to a LAN. Each of the TV devices 16 to 19 is a device comprising the LAN information processor 231 in FIG. 2. Thus, each of the TV devices 16 to 19 can perform the function and operation described with respect to FIGS. 3 to 8.

FIG. 10 illustrates a state where the TV devices 16 and 23 to 26 on a LAN are connected. In this state, the TV device 16 can perform the function and operation described with respect to FIGS. 3 to 8. However, each of the TV devices 23 to 26 is an device without the LAN information processor 231 shown in FIG. 2.

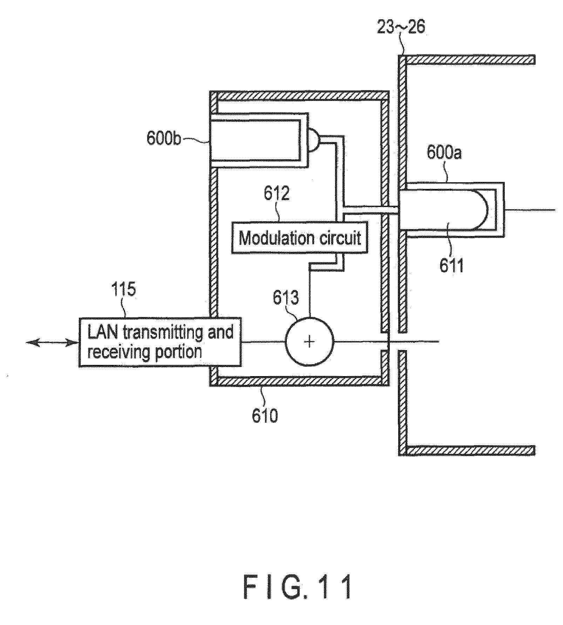

To cause the devices 23 to 26 to transmit own view program information to the TV device 16, an adapter 600 is utilized as shown in FIG. 11. The adapter 600 comprises a pin 611, a connector 600b, a modulation circuit 612, a synthesizer 613, etc.

The pin 611 of the adapter 600 can be connected to, for example, an audio data output connector 600a of the TV devices 23 to 26. The pin 611 connected to the connector 600a is connected to the connector 600b and the modulation circuit 612. The modulation circuit 612 modulates audio data for a certain period (or periodical audio data) input from the pin 611 at a predetermined frequency, and input it to the synthesizing circuit 613. In the synthesizing circuit 613, information output to a LAN and an audio data modulating signal are synthesized, and output to the LAN transmitting and receiving portion 115. This allows the audio data modulating signal at a predetermined frequency to be transmitted to the other TV device 16. Video data for a certain period (or periodical video data) may be utilized instead of the audio data.

On the other hand, in the TV device 16, the information acquisition portion 2311 can acquire the audio or video data for a certain period. A content comparing portion of the common program determination portion shown in FIG. 8 compares audio or video data of a program received by itself with audio or video data transmitted from the outside. Thus, it is possible to determine whether external data (audio or video data) and internal data (audio or video data) are similar/identical to each other or not. That is, the common program determination portion 2321 can determine whether the TV devices 16 and 23 to 26 display the same program or not. In this case, a TV device on a receiving side does not compare audio and video data during commercials.

It should be noted that the above-described ideas can be naturally applied also to a broadcast receiving system, a program of a broadcast receiving device and an information recording and replaying medium in which the program is stored.

A computer-readable information recording and replaying medium stores a program. The program comprises an instruction to connect the device to a LAN, and an instruction to acquire information transmitted by another electronic device over the LAN and to process the information. A plurality of instructions to cause a computer to process the information comprise an instruction to analyze the information and to determine and specify a program received by the other electronic device, an instruction to determine whether a program currently being viewed is identical to the program received by the other electronic device or not, and an instruction to output a predetermined display message if it is determined that the program currently being viewed is identical to the program received by the other electronic device.

Also, the plurality of instructions comprise an instruction to cause a computer to output identification information of the program being viewed to the LAN through a transmitting and receiving device.

Also, the plurality of instructions comprise an instruction to cause a computer to set the identification information of the program being viewed to transmission permission or transmission prohibition in accordance with a plurality of other electronic devices connected to the LAN.

Also, the plurality of instructions comprise an instruction to cause a computer to acquire information from a plurality of electronic devices connected to the LAN based on a predetermined standard. The instruction comprises an instruction to set either automatic acquisition or manual acquisition to be active to acquire the information.

In the above description, even if the term "portion" in each block is replaced with "apparatus," "device," "block" or "module," the embodiment obviously belongs to the category of the present invention. Furthermore, the embodiment belongs to the category of the present invention even if in the claims, a structural element is divided and expressed, a plurality of structural elements are expressed in combination, or they are combined and expressed.

## Claims

1. An electronic device **characterized by** comprising:
a transmitting and receiving portion connected to a local area network (LAN); and
a LAN information processor (231) configured to acquire information transmitted by another electronic device over the LAN,
wherein the LAN information processor (231) comprises:
an external program determination portion (2314) configured to analyze the information, and to determine and specify a program received by the other electronic device;
a common program determination portion (2321) configured to determine whether or not a program currently being viewed is identical to the program received by the other electronic device; and
a message output portion (2325) configured to output a predetermined display message if the common program determination portion (2321) determines that the program currently being viewed is identical to the program received by the other electronic device.

2. The electronic device of Claim 1, **characterized in that** the LAN information processor (231) outputs identification information of the program being viewed to the LAN through the transmitting and receiving portion.

3. The electronic device of Claim 2, **characterized in that** the LAN information processor (231) sets the identification information of the program being viewed to transmission permission or transmission prohibition in accordance with a plurality of other electronic devices connected to the LAN.

4. The electronic device of Claim 1, **characterized in that** the LAN information processor (231) comprises an acquisition portion configured to acquire information from a plurality of electronic devices connected to the LAN based on a predetermined standard.

5. The electronic device of Claim 4, **characterized in that** the acquisition portion comprises an automatic acquisition portion and/or a manual acquisition portion for acquiring the information, and either the automatic acquisition portion or the manual acquisition portion is set to be active.

6. The electronic device of Claim 1, **characterized in that** the external program determination portion (2314) determines first identification information included in the information if the program received by the other electronic device is determined and specified, and
the common program determination portion (2321) determines whether or not second identification information of the program currently being viewed is identical to the first identification information.

7. The electronic device of Claim 1, **characterized in that** the common program determination portion (2321) determines whether or not part of a content item of the program currently being viewed is similar or identical to part of a content item of the program transmitted from the other electronic device using the part of the content item of the program currently being viewed and the part of the content item of the program transmitted by the other electronic device.

8. The electronic device of Claim 7, **characterized in that** the part of the content item is part of video and/or audio data, and video and audio data of a commercial is excluded.

9. A method for controlling an electronic device comprising a transmitting and receiving portion connected to a local area network (LAN) and a LAN information processor configured to acquire information transmitted by another electronic device over the LAN, the method **characterized by** comprising:
analyzing the information, and determining and specifying a program received by the other electronic device;
determining whether or not a program currently being viewed is identical to the program received by the other electronic device; and
outputting a predetermined display message if it is determined that the program currently being viewed is identical to the program received by the other electronic device.

10. The method of Claim 9, **characterized in that** identification information of the program being viewed is output to the LAN through the transmitting and receiving portion.

11. The method of Claim 10, **characterized in that** the identification information of the program being viewed is set to transmission permission or transmission prohibition in accordance with a plurality of other electronic devices connected to the LAN.

12. The method of Claim 10, **characterized in that** information from a plurality of electronic devices connected to the LAN is acquired based on a predetermined standard.

13. The method of Claim 10, **characterized in that** either automatic acquisition or manual acquisition for acquiring the information is set to be active.

14. The method of Claim 10, **characterized in that** first identification information included in the information is determined if a program received by the other electronic device is determined and specified, and
whether or not second identification information of the program currently being viewed is identical to the first identification information is determined.

15. The method of Claim 10, **characterized in that** whether or not part of a content item of the program being received is similar or identical to part of a content item of the program transmitted from the other electronic device is determined using the part of the content item of the program being received and the part of the content item of the program transmitted from the other electronic device, and
the part of the content item is part of video and/or audio data, and video and audio data of a commercial is excluded.
